# FASCICULE DE BREVET EUROPEEN

(11) **EP 3 607 765 B1**
(45) Date de publication et mention de la délivrance du brevet: **09.08.2023**
(21) Numéro de dépôt: 18718893.3
(22) Date de dépôt: 04.04.2018
(51) Int. Cl.: H04W 8/20, H04W 12/02

(54) **PROCÉDÉ D'OBTENTION D'UNE COMMANDE RELATIVE À UN PROFIL D'ACCÈS À UN RÉSEAU**
VERFAHREN ZUM ERHALTEN EINES BEFEHLS IN BEZUG AUF EIN PROFIL FÜR DEN ZUGRIFF AUF EIN NETZWERK
METHOD FOR OBTAINING A COMMAND RELATING TO A PROFILE FOR ACCESSING A NETWORK

(30) Priorité: 07.04.2017 FR 1753051
(43) Date de publication de la demande: 12.02.2020
(73) Titulaire: Orange, 92130 Issy-les-Moulineaux (FR)
(72) Inventeur: GHAROUT, Saïd, 92326 Châtillon Cedex (FR); COUREAU, Laurent, 92326 Châtillon Cedex (FR)
(86) Numéro de dépôt international: PCT/FR2018/050845
(87) Numéro de publication internationale: WO 2018/185435

(56) Documents cités:
- WO-A1-2017/089672
- US-A1- 2016 301 529
- US-A1- 2017 064 552
- Gsm Association: "Remote Provisioning Architecture for Embedded UICC Technical Specification Version 3.0", , 30 juin 2015 (2015-06-30), pages 1-301, XP055355798, Extrait de l'Internet: URL:http://www.gsma.com/connectedliving/wp -content/uploads/2012/03/SGP-02-v3-0.pdf [extrait le 2017-03-16]

## Description

### [Domaine technique]

La présente invention se rapporte au domaine général des télécommunications. Elle concerne plus particulièrement un procédé, un premier serveur, un programme d'ordinateur, un support de données et un système pour la fourniture d'une commande relative à un profil d'accès à un réseau de télécommunications à un équipement mobile.

Elle trouve une application particulièrement intéressante dans le cadre de l'utilisation de modules de sécurité embarqués dans des équipements mobiles grand public, par exemple pour le chargement d'un profil d'accès au réseau après souscription d'une offre de service auprès d'un opérateur de réseau mobile, ou pour la configuration ou la mise à jour à distance du profil, etc.

[Art antérieur]

L'association des opérateurs de téléphonie mobile, ou « GSMA » (de l'anglais « Global System for Mobile Communications ») développe un standard de carte « SIM » (de l'anglais « Subscriber Identity Module ») embarquée, ou « eSIM », de type « eUICC » (de l'anglais « embedded Universal Integrated Circuit Card ») pour des équipements mobiles grand public, tels qu'un terminal mobile ou une tablette. Une carte SIM embarquée est destinée à être inamovible et (re)programmable à distance. Ainsi, lors de l'acquisition d'un nouvel équipement mobile, il n'est plus nécessaire de manipuler au préalable la carte SIM afin d'accéder au réseau d'un opérateur, voire de la changer lors d'un changement d'opérateur. Il est prévu qu'un utilisateur s'abonne directement via l'écran de son équipement mobile, ou en se rendant dans une boutique de l'opérateur, et charge un profil d'accès au réseau ou/et paramètre son profil au fil du temps à partir de son équipement mobile, voire qu'il change d'opérateur de la même façon. Une carte eSIM est identifiée de façon unique au moyen d'un identifiant de module ou « EID » (pour « eUICC Identifier »), qui constitue un identifiant physique de la carte, défini en usine et non modifiable. De ce fait cet identifiant est considéré comme une donnée sensible d'un point de vue protection de la vie privée, qui ne peut être exposée sans le consentement de l'utilisateur de l'équipement mobile.

Dans le cas par exemple de l'obtention et du chargement d'un profil initial d'accès au réseau par un équipement mobile, la GSMA prévoit, lors de la souscription d'un abonnement auprès d'un opérateur de réseau mobile, de gérer dans un serveur intermédiaire du réseau indépendant des opérateurs une correspondance entre l'identifiant EID d'un module de sécurité de type eUICC et l'opérateur auprès duquel l'abonnement est souscrit et pour lequel l'opérateur tient à disposition un profil d'accès qu'il a généré pour le module. Lorsqu'un équipement mobile souhaite obtenir un profil d'accès au réseau suite à une souscription auprès d'un opérateur, il s'adresse au serveur intermédiaire, appelé habituellement « serveur de découverte », qui identifie, sur la base de l'identifiant EID du module de sécurité de l'équipement mobile, l'opérateur qui a généré un profil pour cet équipement. Le serveur intermédiaire envoie alors à l'équipement mobile l'adresse d'un serveur de gestion de l'opérateur, appelé habituellement « serveur de préparation de données », auprès duquel l'équipement peut obtenir son profil. L'équipement mobile établit alors une connexion avec le serveur de gestion de l'opérateur de manière à récupérer son profil et l'installer dans le module de sécurité. Ce mode de fonctionnement nécessite de partager l'identifiant du module de sécurité avec le serveur intermédiaire du réseau qui stocke des correspondances entre des identifiants EID de modules de sécurité et des adresses de serveur de gestion d'opérateurs qui génèrent les profils d'accès au réseau.

Une telle solution offre une certaine souplesse dans la gestion d'abonnements par l'utilisateur qui peut facilement commander depuis son équipement mobile l'activation d'une souscription initiale, ou d'une nouvelle souscription dans le cas d'un changement d'opérateur. Cependant, ce mode de fonctionnement nécessite de partager l'identifiant EID du module de sécurité avec le serveur intermédiaire du réseau qui stocke des correspondances entre un identifiant de module de sécurité et une adresse de serveur de gestion de l'opérateur qui a généré le profil d'accès au réseau. Le serveur intermédiaire est ainsi capable de tracer l'identifiant EID d'un module de sécurité et de porter atteinte à la vie privée de l'utilisateur de l'équipement mobile. Par ailleurs, l'identifiant EID du module de sécurité est exposé dans le réseau, en étant transmis et/ou partagé entre plusieurs entités du réseau, sans qu'à aucun moment l'utilisateur de l'équipement mobile n'ait donné son consentement.

Cet identifiant, non modifiable, est considéré comme une donnée sensible dont l'exposition doit être réduite au minimum.

La publication brevet US2017/064552A1 décrit une méthode et un dispositif destinés à télécharger un profil, et/ou une commande relative à un profil, de communication réseau dans un équipement d'un réseau mobile.

Un des buts de l'invention est de remédier à des insuffisances/inconvénients de l'état de la technique et/ou d'y apporter des améliorations.

### [Résumé de l'invention]

La présente invention est définie par l'objet des revendications indépendantes. Des modes de réalisation particuliers sont définis par les revendications dépendantes.

### [Description des figures]

D'autres caractéristiques et avantages de la présente invention seront mieux compris de la description et des dessins annexés parmi lesquels :
- la figure 1 présente les étapes d'un procédé d'obtention d'une commande relative à un profil d'accès à un réseau, selon un exemple de réalisation ;
- la figure 2 est une représentation schématique d'un équipement mobile, apte à mettre en oeuvre certaines des étapes du procédé d'obtention d'une commande relative à un profil d'accès à un réseau, selon un exemple de réalisation ;
- la figure 3 est une représentation schématique d'un serveur de préparation de données, apte à mettre en oeuvre certaines des étapes du procédé d'obtention d'une commande relative à un profil d'accès à un réseau, selon un exemple de réalisation.

### [Description détaillée]

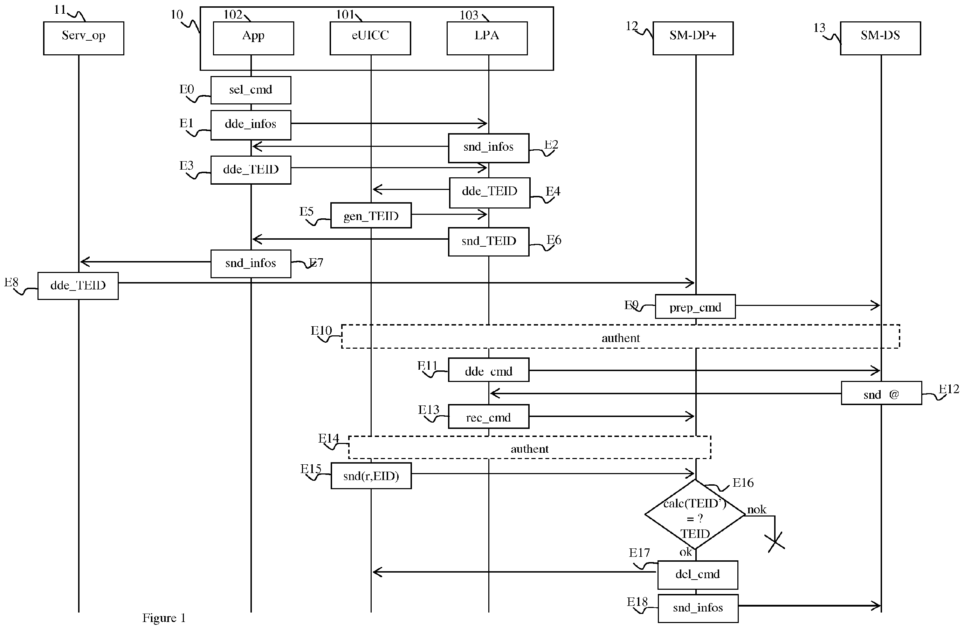

Les étapes d'un procédé d'obtention d'une commande relative à un profil d'accès au réseau par un équipement mobile, selon un exemple de réalisation vont maintenant être décrites en relation avec la figure 1.

Un équipement mobile 10 d'utilisateur (l'utilisateur n'est pas représenté sur la figure 1), par exemple un terminal mobile ou une tablette, est équipé d'un module de sécurité embarqué 101, ou « eSIM », de type eUICC (de l'anglais « embedded Universal Integrated Circuit Card), ou un module de sécurité amovible. Le module de sécurité 101 est identifié par un identifiant physique de carte de type EID (pour « eUICC Identifier »), défini en usine. L'équipement mobile 10 comprend également une application mobile 102 agencée pour permettre à l'utilisateur d'initier et/ou de valider une commande relative à un profil d'accès à un réseau de télécommunications. L'application mobile 102 est fournie par un fournisseur de services, par exemple un opérateur de réseau mobile. Le profil d'accès est destiné à permettre à l'utilisateur d'accéder au réseau à partir de l'équipement mobile 10. On entend par « commande relative à un profil d'accès » une commande comprenant des instructions de code destinées à être exécutées sur le module de sécurité 101. Par exemple la commande consiste en un chargement du profil d'accès au réseau sur le module de sécurité et en une activation du profil après que l'utilisateur a souscrit une offre de service associée auprès d'un opérateur, ou en une configuration ou une mise à jour du profil d'accès préalablement chargé dans le module de sécurité 101, suite à la validation de cette configuration ou cette mise à jour par l'utilisateur. A cette fin l'application mobile 102 est agencée pour communiquer à un premier serveur 11, appelé « serveur opérateur », des données qui comprennent des caractéristiques physiques de l'équipement mobile 10 et du module de sécurité 101, ainsi que des données correspondant à la commande relative au profil d'accès et validée par l'utilisateur. Le serveur opérateur 11 est agencé pour demander à un deuxième serveur 12, appelé « serveur de préparation de données », de préparer la commande relative au profil d'accès au réseau pour un module de sécurité du type de celui de l'équipement mobile 10. Le serveur de préparation de données 12 est agencé pour préparer la commande qu'il a reçue et pour notifier un troisième serveur 13, appelé « serveur de découverte », qu'un événement est en attente pour un module de sécurité qu'il désigne au moyen d'un identifiant anonyme. Cette notification d'événement permet d'indiquer au serveur de découverte 13 qu'une commande relative à un profil d'accès a été préparée et est disponible au niveau du serveur de préparation 12 sans fournir au serveur de découverte 13 d'informations quant au contenu de cette commande. « Disponible » signifie que la commande peut être retirée afin d'être mise en oeuvre sur l'équipement mobile 10. L'équipement mobile 10 est également agencé pour s'adresser au serveur de découverte 13, afin d'obtenir l'adresse du serveur de préparation de données 12 qui a préparé la commande relative au profil d'accès. L'équipement mobile 10 est ainsi apte, après obtention de l'adresse du serveur de préparations de données 12, à requérir auprès du serveur de préparation de données 12 la commande relative au profil, telle que le chargement initial du profil ou l'exécution de la configuration ou une mise à jour d'un profil déjà installé. Une fois obtenue, la commande relative au profil est exécutée sur le module de sécurité 101. L'équipement mobile 10 comprend également un gestionnaire local de profil 103, ou LPA (pour « Local Profile Assistant »). Le gestionnaire local de profil 103 fournit à l'utilisateur de l'équipement mobile 10 une interface administrative de l'équipement mobile 10. Dans le cas par exemple du chargement d'un profil d'accès au réseau sur l'équipement mobile 10, le gestionnaire local de profil 103 est agencé pour récupérer le profil auprès de l'opérateur via une connexion Internet sécurisée auprès du serveur de préparation de données 12 et pour commander son installation et son activation sur le module de sécurité 101. Dans un exemple de réalisation, le gestionnaire local de profil 103 se trouve dans le module de sécurité 101. Il est ainsi agencé pour faire des calculs et notamment pour générer les identifiants anonymes TEID, sous le contrôle de l'application mobile 102.

Ainsi, dans une étape initiale E0 de sélection, l'utilisateur sélectionne, au moyen de son équipement mobile 10 et par le biais de l'application mobile 102 une commande relative à un profil d'accès au réseau telle que le chargement initial, c'est-à-dire l'obtention et l'activation, du profil d'accès au réseau sur l'équipement mobile, une configuration du profil, une mise à jour de règles relatives au profil (on parle de « policy rules » en anglais), une opération de maintenance du profil, etc.

Cette sélection déclenche dans une étape suivante E1 de demande d'informations, l'envoi par l'application mobile 102 au gestionnaire local de profil 103 d'un message de demande d'informations. Ce message est destiné à obtenir des caractéristiques physiques de l'équipement mobile 10 et du module de sécurité 101. Les caractéristiques physiques concernent par exemple la taille de l'écran de l'équipement mobile 10, les capacités à communiquer en NFC (de l'anglais « Near Field Communication ») de l'équipement, la taille de la mémoire du module de sécurité 101, la version de système d'exploitation, etc. Ces caractéristiques physiques sont destinées à être prises en compte par le serveur de préparation 12 lors de la préparation de la commande relative au profil afin que celle-ci soit adaptée à l'équipement mobile 10 et au module de sécurité 101 sur lesquels elle va être exécutée.

Dans une étape suivante E2 de réponse, le gestionnaire local de profil 103 envoie en réponse des caractéristiques physiques du module de sécurité 101 et de l'équipement mobile 10.

Dans une étape suivante E3 de demande, l'application 102 envoie au gestionnaire local de profil 103 une demande d'identifiant anonyme du module de sécurité 101.

Cette demande est reçue par le gestionnaire local de profil 103 et retransmise au module de sécurité 101 dans une étape E4 de retransmission.

Dans une étape suivante E5 de réception et de génération, le module de sécurité 101 reçoit la demande de génération d'identifiant anonyme et dérive un identifiant anonyme TEID de son identifiant physique EID. A cet effet, il génère un aléa r au moyen par exemple d'un générateur pseudo-aléatoire et applique une fonction à sens unique f à l'aléa r et à son identifiant physique EID. En d'autres termes, il calcule : *TEID = f*(*EID,r*)*.* On rappelle qu'une fonction à sens unique est une fonction qui peut être aisément calculée mais qui est difficile à inverser, c'est-à-dire que pour tout *x* dont on connaît l'image *f*(*x*), il est très difficile de (re)trouver *x.* La fonction à sens unique f est par exemple une fonction de hachage, réputée non inversible, telle que SHA-3 ou SHA-256 (de l'anglais « Secure Hash Algorithm »). Dans le cas où la fonction à sens unique est SHA-256, on peut, dans un exemple de réalisation, ne prendre que les 32 premiers digits, ou les 32 derniers digits, du résultat de la fonction de hachage. Cela permet de prendre en compte des contraintes de taille au niveau d'un ou de plusieurs serveurs. En effet, un identifiant de module de sécurité est une valeur codée sur 32 digits. Prendre les 32 premiers ou derniers digits permet d'obtenir des identifiants anonymes de même taille que les identifiants physiques de module. L'invention n'est bien sûr pas limitée à ces fonctions. Par exemple des fonctions recommandées par la fédération SOGIS (« Senior Officials Group Information Systems Security ») et disponibles sous : http://www.sogis.org/documents/cc/crypto/SOGIS-Agreed-Cryptographic-Mechanisms-1.0.pdf peuvent être utilisées. L'utilisation d'une fonction de hachage pour le calcul de l'identifiant anonyme du module de sécurité 101 permet de garantir l'anonymat du module 101. La fonction f possède également la propriété de non collision, c'est-à-dire que pour tout *x* dont on connaît l'image *f(x)* il est très difficile de trouver y tel que *f*(*x*) = *f*(*y*). Cette propriété est vérifiée dans la mesure où une donnée en entrée de la fonction est de taille inférieure ou égale à la donnée de sortie. Cette propriété garantit l'unicité des identifiants anonymes générés. L'identifiant anonyme TEID ainsi calculé est envoyé au gestionnaire local de profil 103 en fin d'étape E5.

L'identifiant anonyme TEID reçu est mémorisé par le gestionnaire local de profil 103 dans une étape E6 de mémorisation et d'envoi et retransmis à l'application mobile 102.

Dans une étape E7 d'envoi, l'application mobile 102 envoie au serveur opérateur 11, les caractéristiques physiques de l'équipement mobile 10 et du module de sécurité 101 qu'il a obtenues au terme de l'étape E2, l'identifiant anonyme TEID généré et la commande relative au profil d'accès au réseau sélectionnée par l'utilisateur au cours de l'étape initiale E0.

Dans une étape suivante E8 d'envoi d'une requête, le serveur opérateur 11 envoie au serveur de préparation de données 12 une requête de préparation qui comprend l'identifiant anonyme TEID ainsi que les informations nécessaires à la préparation de la commande relative au profil d'accès au réseau. Ces informations comprennent la commande sélectionnée et les caractéristiques physiques de l'équipement 10 et du module 101.

Dans une étape suivante E9 de préparation et d'envoi, le serveur de préparation de données 12 prépare la commande relative au profil d'accès et adaptée à l'équipement mobile 10. « Préparer la commande » signifie générer un module logiciel comprenant un ensemble d'instructions de code destinées à être exécutées sur le module de sécurité 101. Le serveur de préparation 12 envoie également au serveur de découverte 13 une notification associée à l'identifiant anonyme TEID du module de sécurité 101. La notification est destinée à informer le serveur de découverte 13 qu'une commande a été préparée pour un module de sécurité dont l'identifiant anonyme est TEID et est disponible au niveau du serveur de préparation de données 12. Le serveur de découverte 13 mémorise qu'un événement est en attente pour l'identifiant anonyme TEID du module de sécurité 101 ; il mémorise également l'adresse du serveur de préparation de données 12 apte à fournir la commande associée à cet événement.

Dans une phase suivante décrite ci-dessous et déclenchée suite à une action volontaire de l'utilisateur, ou automatiquement, par exemple après un redémarrage de l'équipement mobile 10 ou après un rafraîchissement régulier mis en oeuvre au niveau de l'équipement mobile 10, la commande relative au profil d'accès au réseau est exécutée à la suite d'échanges entre l'équipement mobile 10, le serveur de découverte 13 et le serveur de préparation de données 12.

Ainsi, dans une étape suivante E10 d'authentification, optionnelle, une authentification mutuelle entre le module de sécurité 101 et le serveur de découverte 13 est mise en oeuvre. Les étapes de cette authentification sont décrites dans la spécification GSMA SGP.22 qui décrit une architecture pour la fourniture à distance de profil à un module de sécurité (ou « RSP » pour « Remote SIM Provisioning »). A noter que l'étape E10 est ici optionnelle dans le sens où, lorsqu'elle a lieu, le module de sécurité 101 fournit au serveur de découverte 13 son identifiant physique EID, conformément à la spécification SGP.22. On considère dans ce cas que l'utilisateur, en participant à cette authentification, consent de manière implicite à la divulgation de l'identifiant physique EID du module de sécurité 101. Cette étape, lorsqu'elle n'est pas exécutée, ne nuit pas à la sécurité du procédé. En effet, le serveur de découverte 13 ne connaît à ce stade qu'un identifiant anonyme et aléatoire d'un module de sécurité, qu'il ne peut relier à un identifiant physique EID de module et/ou à un module de sécurité auquel il a déjà eu à faire. L'anonymat du module de sécurité 101 est ainsi assuré vis-à-vis du serveur de découverte 13. Dans un autre exemple de réalisation, l'authentification, optionnelle, mise en oeuvre au cours de l'étape E10 est anonyme. Elle est basée par exemple sur une signature cryptographique de groupe. Dans ce cas, le serveur de découverte 13 a la garantie que le module de sécurité 101 qui s'est authentifié est un module eUICC valide ; le serveur de découverte 13 n'a cependant pas connaissance de l'identifiant EID du module 101.

Dans une étape suivante E11 de demande d'informations, le gestionnaire local de profil 103 envoie au serveur de découverte 13 une requête d'obtention d'informations relatives à un ou des événements concernant le module de sécurité. La requête d'obtention d'informations comprend l'identifiant anonyme TEID que le gestionnaire local de profil 103 a mémorisé au cours de l'étape E7 de réception et de mémorisation.

Dans une étape suivante E12 de réponse, le serveur de découverte 13 envoie au gestionnaire local de profil 103 l'adresse du serveur de préparation de données 12 qui a été enregistrée en association avec l'identifiant anonyme TEID qu'il a reçu au cours de l'étape précédente.

Dans une étape suivante E13 d'accès au serveur de préparation, le gestionnaire local de profil 103 de l'équipement mobile 10 se connecte de manière sécurisée au serveur de préparation de données 12 dont l'adresse lui a été fournie au cours de l'étape précédente. La connexion est par exemple conforme au protocole TLS (de l'anglais « Transport Layer Security »). Le gestionnaire local de profil 103 fournit au serveur de préparation de données 12 l'identifiant temporaire TEID du module de sécurité 101 afin de récupérer la commande relative au profil d'accès et préparée par le serveur de préparation de données 12 au cours de l'étape E10 pour le module de sécurité 101.

Dans une étape suivante E14 d'authentification, une authentification mutuelle entre le module de sécurité 101 et le serveur de préparation de données 12 est mise en oeuvre, conformément à la spécification GSMA SGP.22. A ce stade, le module de sécurité 101 a la garantie de dialoguer avec un serveur de préparation de données légitime et le serveur de préparation de données 12 a la garantie dialoguer avec un module de sécurité légitime. Cependant, bien que connaissant l'identifiant physique EID du module qui s'est authentifié, il ne sait pas à quel identifiant anonyme cet identifiant correspond.

Dans une étape suivante E15 d'envoi de preuve, le module de sécurité 101 envoie au serveur de préparation de données 12 l'aléa r utilisé pour calculer l'identifiant anonyme TEID du module 101 au cours de l'étape E5 de génération, et éventuellement son identifiant physique EID. A noter que l'identifiant EID du module 101 est récupéré par le serveur de préparation de données 12 au cours de l'étape E14 d'authentification. Cet envoi est destiné à permettre au serveur de préparation de données 12 d'identifier le module de sécurité associé à l'identifiant anonyme TEID. Cet envoi constitue aussi une requête du module de sécurité 101 pour obtenir la commande. Par ailleurs, cet envoi est également une preuve pour le serveur de préparation de données 12 que l'identifiant temporaire TEID pour lequel la commande relative au profil d'accès a été préparée correspond à l'identifiant physique EID du module de sécurité 101 qui requiert la commande.

Dans une étape suivante E16 de calcul et de vérification, le serveur de découverte 12 calcule un identifiant de contrôle TEID' à partir de l'identifiant physique EID et de l'aléa r qu'il a reçus au cours de l'étape précédente. A cette fin le serveur de préparation de données 12 applique la même fonction à sens unique f que celle utilisée par le module de sécurité 101 au cours de l'étape E5 de génération à l'identifiant physique EID et à l'aléa r reçus au cours de l'étape E15. Le serveur de préparation de données 12 vérifie ensuite que l'identifiant de contrôle TEID' est égal à l'identifiant temporaire TEID que lui a fourni le gestionnaire local 103 au cours de l'étape E14.

Dans un premier cas (branche « ok » sur la figure 1) où l'identifiant de contrôle TEID' est égal à l'identifiant temporaire TEID, le serveur de préparation de données 12 délivre la commande qu'il a préparée pour exécution au module de sécurité 101 dans une étape E17 délivrance. Le serveur de préparation de données 12 est assuré qu'il délivre la commande qu'il a préparée au module de sécurité 101 pour lequel elle a été requise par le serveur opérateur 11 au cours de l'étape E8 d'envoi d'une requête de préparation.

Dans un deuxième cas (branche « nok » sur la figure 1) où l'identifiant de contrôle TEID' ne correspond pas à l'identifiant anonyme TEID, le procédé s'arrête. En effet, le module de sécurité qui a envoyé son identifiant au cours de l'étape E15 pour obtenir une commande n'est pas celui pour lequel la commande a été préparée suite à la requête de préparation envoyée par le serveur opérateur 11 au cours de l'étape E8.

Dans une étape suivante E18 d'information, le serveur de préparation de données 12 envoie au serveur de découverte 13 un message de relâchement destiné à l'informer que la commande relative au profil associée à l'identifiant anonyme de contrôle TEID' a été traitée. Le serveur de découverte 13 peut alors supprimer l'événement qu'il a créé et mémorisé pour l'identifiant anonyme TEID' au terme de l'étape E9.

Dans un autre exemple de réalisation, l'étape E13 d'accès au serveur de préparation au cours de laquelle le gestionnaire local de profil 103 se connecte au serveur de préparation de données 12 et lui fournit l'identifiant temporaire TEID du module de sécurité 101 n'est pas mise en oeuvre. Le serveur de préparation de données 12 obtient l'identifiant physique EID du module de sécurité 101 au cours de l'étape E14 d'authentification. Il obtient également l'aléa r au cours de l'étape E15 d'envoi de preuve. Il calcule, au cours de l'étape E16 de calcul et de vérification, un nouvel identifiant anonyme TEID" à partir de l'aléa r et de l'identifiant EID reçus précédemment et vérifie la présence de cet identifiant anonyme TEID" dans une base de données qui contient les identifiants anonymes pour lesquels il a des commandes en attente. L'unicité des identifiants anonymes, inhérente à l'utilisation de la fonction f à sens unique qui possède la propriété de non collision, garantit que l'identifiant anonyme est associé à un identifiant physique légitime de module de sécurité.

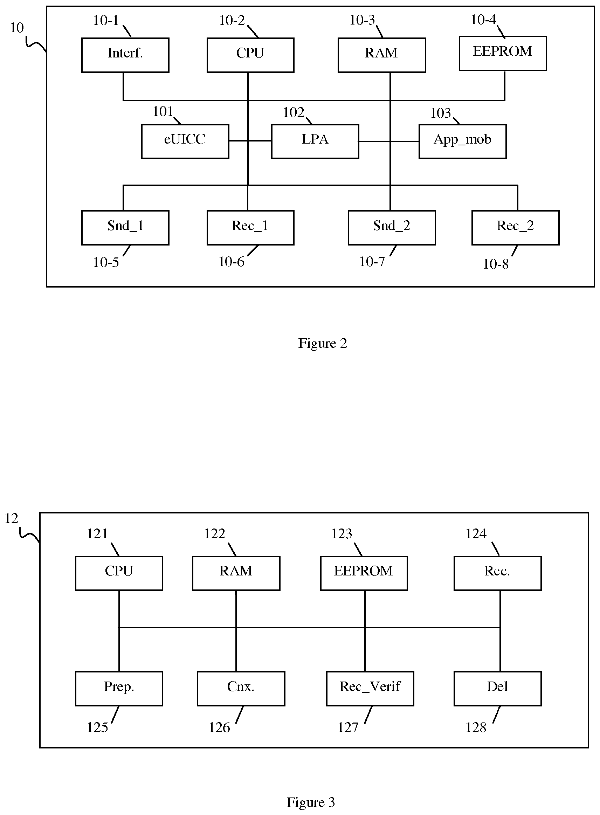

Un équipement mobile 10, selon un exemple de réalisation, va maintenant être décrit en relation avec la figure 2.

L'équipement mobile 10 est un équipement utilisateur tel qu'un terminal mobile ou une tablette. Il comprend :
- une interface radio 10-1, agencée pour s'interfacer avec un réseau mobile de communication,
- un microprocesseur 10-2, ou CPU (pour « Central Processing Unit »), agencé pour charger des instructions en mémoire, les exécuter et effectuer des opérations,
- un ensemble de mémoires, dont une mémoire volatile 10-3, ou RAM (pour « Random Access Memory ») utilisée pour exécuter des instructions de code, stocker des variables, etc., une mémoire de stockage 10-4 de type EEPROM (pour « Electronically-Erasable Programmable Read-Only Memory ». La mémoire de stockage 10-4 est agencée pour mémoriser des données et des applications. En particulier, la mémoire de stockage 10-4 mémorise un module logiciel comprenant des instructions de code pour mettre en oeuvre les étapes du procédé d'obtention d'une commande relative à un profil d'accès,
- un module de sécurité 101, par exemple un module eUICC, agencé pour stocker et traiter des données sensibles, telles que des clés et des algorithmes cryptographiques. En particulier, le module de sécurité est agencé pour exécuter des commandes relatives à un profil d'accès au réseau qui comprend ces données sensibles. Par exemple, une commande peut consister en le chargement d'un profil d'accès au réseau après souscription à une offre de service auprès d'un opérateur de réseau, en la configuration ou en la mise à jour du profil, etc.,
- un gestionnaire local de profil 103, agencé pour fournir à l'utilisateur de l'équipement mobile 10 une interface administrative de l'équipement mobile 10. Par exemple, dans le cas du chargement d'un profil d'accès au réseau sur l'équipement mobile 10, le gestionnaire local de profil 103 est apte à récupérer le profil auprès de l'opérateur via une connexion Internet sécurisée auprès du serveur de préparation de données 12 et à commander son installation et son activation sur le module de sécurité 101,
- une application mobile 102, agencée pour proposer une interface à partir de laquelle l'utilisateur de l'équipement mobile 10 peut passer des commandes relatives au profil d'accès au réseau, telles que souscrire un abonnement auprès d'un opérateur, demander une configuration ou une mise à jour d'un profil d'accès au réseau, etc. L'application mobile 102 est fournie par un fournisseur de services, par exemple un opérateur de réseau mobile.

L'équipement mobile 10 comprend également :
- des premiers moyens d'envoi 10-5, agencés pour envoyer à un premier serveur 13 une requête d'obtention d'informations destinée à obtenir la commande, ladite requête comprenant un identifiant anonyme du module de sécurité calculé à partir d'un identifiant physique du module et d'un aléa. Les premiers moyens d'envoi sont agencés pour mettre en oeuvre l'étape E11 du procédé d'obtention d'une commande relative à un profil d'accès au réseau tel que décrit précédemment ;
- des premiers moyens de réception 10-6, agencés pour recevoir en provenance du premier serveur 13 une adresse d'un deuxième serveur 12, ledit deuxième serveur ayant préparé la commande et associé ladite commande à l'identifiant anonyme du module de sécurité, une requête de ladite commande associée audit identifiant anonyme ayant été préalablement reçue d'un troisième serveur 11 par le deuxième serveur. Les premiers moyens de réception 10-6 sont agencés pour mettre en oeuvre l'étape E12 du procédé décrit précédemment ;
- des deuxièmes moyens d'envoi 10-7, agencés pour envoyer au deuxième serveur de l'identifiant physique du module et de l'aléa. Les deuxièmes moyens d'envoi 10-7 sont agencés pour mettre en oeuvre l'étape E15 du procédé décrit précédemment ;
- des deuxièmes moyens de réception 10-8, agencés pour recevoir en provenance du deuxième serveur de ladite commande lorsqu'une vérification par le deuxième serveur que l'identifiant anonyme du module de sécurité a été calculé à partir de l'identifiant physique reçu et de l'aléa est positive. Les deuxièmes moyens de réception sont agencés pour mettre en oeuvre l'étape E17 du procédé d'obtention d'un profil d'accès au réseau tel que décrit précédemment.

Le gestionnaire local de profil 103, l'application mobile 102, les premiers moyens d'envoi 10-5, les premiers moyens de réception 10-6, les deuxièmes moyens d'envoi 10-7 et les deuxièmes moyens de réception 10-8 sont de préférence des modules logiciels comprenant des instructions logicielles pour mettre en oeuvre les étapes du procédé d'obtention d'une commande relative à un profil d'accès au réseau précédemment décrit.

L'invention concerne donc aussi :
- un programme d'ordinateur comportant des instructions pour la mise en oeuvre du procédé d'obtention d'une commande relative à un profil d'accès tel que décrit précédemment lorsque ce programme est exécuté par un processeur de l'équipement mobile 10,
- un support d'enregistrement lisible sur lequel est enregistré le programme d'ordinateur décrit ci-dessus.

Un serveur 12, agencé pour préparer des commandes requises depuis un équipement mobile 10, selon un exemple de réalisation va maintenant être décrit en relation avec la figure 3.

Le serveur 12 est un équipement informatique, accessible depuis un réseau de données tel qu'Internet. Il comprend :
- une unité de traitement 121, ou CPU, destinée à charger des instructions en mémoire, à les exécuter, à effectuer des opérations ;
- un ensemble de mémoires, dont une mémoire volatile 122, ou RAM utilisée pour exécuter des instructions de code, stocker des variables, etc., et une mémoire de stockage 123 de type EEPROM. En particulier, la mémoire de stockage 123 est agencée pour mémoriser un module logiciel de fourniture d'une commande relative à un profil d'accès au réseau qui comprend des instructions de code pour mettre en oeuvre celles des étapes du procédé d'obtention d'une commande relative à un profil d'accès qui sont mises en oeuvre par le serveur 12, ou serveur de préparation de données, tel que décrit précédemment.

Le serveur 12 comprend également :
- un module de réception 124, agencé pour recevoir en provenance d'un deuxième serveur 11, ou serveur opérateur, une requête de ladite commande associée à un identifiant anonyme du module de sécurité, ledit identifiant anonyme ayant été calculé à partir d'un identifiant physique du module et d'un aléa. Le module de réception 124 est agencé pour mettre en oeuvre l'étape E8 du procédé d'obtention d'une commande relative à un profil d'accès au réseau tel que décrit précédemment ;
- un module de préparation 125, agencé pour préparer ladite commande et pour envoyer à un troisième serveur 13, ou serveur de découverte, une notification destinée à indiquer que la commande a été préparée. La notification comprend l'adresse du serveur et l'identifiant anonyme. Le module de préparation 125 est agencé pour mettre en oeuvre l'étape E9 du procédé d'obtention d'une commande relative à un profil d'accès au réseau tel que décrit précédemment ;
- un module de connexion 126, agencé pour accepter une connexion de l'équipement mobile au serveur, l'adresse du serveur 12 ayant été préalablement fournie à l'équipement mobile par le troisième serveur 13. Le module de connexion 126 est agencé pour mettre en oeuvre l'étape E13 du procédé décrit précédemment ;
- un module 127 de réception et de vérification, agencé pour recevoir en provenance du module de sécurité 101 l'identifiant physique du module et de l'aléa, et pour vérifier que l'identifiant anonyme reçu de l'équipement mobile a été calculé à partir de l'identifiant physique du module et de l'aléa. Le module 127 de réception et de vérification est agencé pour mettre en oeuvre l'étape E16 du procédé d'obtention d'une commande relative à un profil d'accès au réseau tel que décrit précédemment ;
- un module de délivrance 128, agencé pour délivrer ladite commande à l'équipement mobile 10 lorsque la vérification est positive. Le module de délivrance 128 est agencé pour mettre en oeuvre l'étape E17 du procédé décrit précédemment.

Les modules de réception 124, de préparation 125, de connexion 126, 127 de réception et de vérification et le module de délivrance sont de préférence des modules logiciels comprenant des instructions logicielles pour mettre en oeuvre celles des étapes du procédé d'obtention d'une commande relative à un profil d'accès au réseau tel que décrit précédemment et qui sont mises en oeuvre par le serveur 12.

L'invention concerne donc aussi :
- un programme d'ordinateur comportant des instructions pour la mise en oeuvre des étapes du procédé d'obtention d'une commande relative à un profil d'accès au réseau tel que décrit précédemment et mises en oeuvre par le serveur lorsque ce programme est exécuté par un processeur du serveur 12, ou serveur de préparation de données,
- un support d'enregistrement lisible sur lequel est enregistré le programme d'ordinateur décrit ci-dessus.

L'invention concerne également un système de fourniture d'une commande relative à un profil d'accès au réseau. Le système comprend :
- au moins un équipement mobile 10 tel que décrit précédemment,
- au moins un serveur 12 de préparation de données, tel que décrit précédemment, et
- un serveur de découverte 13 qui comprend :
   - un module de réception de notification et de mémorisation, agencé pour recevoir du serveur 12 de préparation de données une notification qui comprend l'identifiant anonyme TEID du module de sécurité, associé à une adresse du serveur 12 de préparation de données. La notification est destinée à informer le serveur de découverte 13 qu'une commande relative à un profil d'accès au réseau a été préparée par le serveur 12 de préparation de données et est disponible pour retrait par l'équipement mobile 10. L'identifiant anonyme TEID du module de sécurité est mémorisé par le serveur de découverte 13 en association avec l'adresse du serveur de préparation 12 ;
   - un module de réception de requête d'obtention d'informations, agencé pour recevoir de l'équipement mobile 10 une requête d'obtention d'informations comprenant l'identifiant anonyme du module de sécurité. Cette requête est destinée à interroger le serveur de découverte 13 afin d'obtenir l'adresse du serveur de préparation de données 12 lorsqu'un événement associé à l'identifiant anonyme a été mémorisé par le serveur de découverte 13 ;
   - un module d'envoi, agencé pour envoyer à l'équipement mobile, suite à la réception en provenance de l'équipement mobile 10 d'une requête d'obtention d'informations, l'adresse du serveur de préparation de données 12 associé à l'identifiant anonyme. Une fois l'adresse du serveur de préparation de données 12 obtenu par l'équipement mobile 10, celui-ci peut retirer ladite commande relative au profil d'accès au réseau auprès dudit serveur de préparation de données 12.

Le module de réception de notification et de mémorisation, le module de réception de requête d'obtention d'information et le module d'envoi du serveur de découverte 13 sont de préférence des module logiciels comprenant des instructions de code pour mettre en oeuvre celles des étapes du procédé d'obtention d'une commande relative à un profil d'accès au réseau qui sont mises en oeuvre par le serveur de découverte 13.

## Revendications

1. Procédé de fourniture à un équipement mobile (10) par un premier serveur (12) d'une commande relative à un profil d'accès à un réseau, la commande étant destinée à être mise en oeuvre sur un module de sécurité (101) dudit équipement, ledit procédé comprenant :
- réception (E8) par le premier serveur en provenance d'un deuxième serveur (11) d'une requête de ladite commande associée à un identifiant anonyme du module de sécurité, ladite requête comprenant ledit identifiant anonyme, ledit identifiant anonyme ayant été calculé à partir d'un identifiant physique du module de sécurité et d'un aléa,
- préparation (E9) par le premier serveur de ladite commande et envoi à un troisième serveur (13) d'une notification destinée à indiquer que la commande a été préparée, la notification comprenant l'adresse du premier serveur et l'identifiant anonyme,
- connexion (E13) de l'équipement mobile au premier serveur, l'adresse du premier serveur (12) ayant été préalablement fournie à l'équipement mobile par le troisième serveur (13),
- réception (E16) par le premier serveur en provenance du module de sécurité de l'identifiant physique du module de sécurité et de l'aléa, et vérification par le premier serveur que l'identifiant anonyme reçu du deuxième serveur a été calculé à partir de l'identifiant physique du module de sécurité et de l'aléa, et
- délivrance (E17), audit équipement mobile, de ladite commande par le premier serveur lorsque la vérification est positive.

2. Procédé de fourniture selon la revendication 1, ledit procédé comprenant en outre :
- envoi (E11) par l'équipement mobile au troisième serveur (13) d'une requête d'obtention d'informations destinée à obtenir la commande, ladite requête comprenant l' identifiant anonyme du module de sécurité

3. Procédé de fourniture selon la revendication 2, comprenant :
- calcul (E5) par le module de sécurité de l'identifiant anonyme du module de sécurité en appliquant une fonction à sens unique à l'identifiant physique du module et à l'aléa, ladite fonction à sens unique ayant également une propriété de non collision,
- envoi (E7) par l'équipement mobile dudit identifiant anonyme au deuxième serveur (11).

4. Procédé de fourniture selon l'une des revendications précédentes comprenant une authentification (E10) mutuelle entre le module de sécurité et le troisième serveur (13), ladite authentification étant représentative d'un accord de l'utilisateur de divulguer l'identifiant physique du module de sécurité au troisième serveur (13).

5. Procédé de fourniture selon l'une des revendications 1 à 3 comprenant une authentification anonyme du module de sécurité auprès du troisième serveur (13) mise en oeuvre au moyen d'un algorithme de signature de groupe.

6. Premier serveur (12) agencé pour préparer et fournir une commande relative à un profil d'accès au réseau requise depuis un équipement mobile, la commande étant destinée à être mise en oeuvre sur un module de sécurité (101) dudit équipement, ledit serveur comprenant :
- des moyens de réception (124), agencés pour recevoir en provenance d'un deuxième serveur (11) une requête de ladite commande associée à un identifiant anonyme du module de sécurité, ladite requête comprenant ledit identifiant anonyme, ledit identifiant anonyme ayant été calculé à partir d'un identifiant physique du module de sécurité et d'un aléa.
- des moyens de préparation (125), agencés pour préparer ladite commande et pour envoyer à un troisième serveur (13) une notification destinée à indiquer que la commande a été préparée, la notification comprenant l'adresse du premier serveur et l'identifiant anonyme,
- des moyens de connexion (126), agencés pour accepter une connexion de l'équipement mobile, l'adresse du premier serveur (12) ayant été préalablement fournie à l'équipement mobile par le troisième serveur (13),
- des moyens (127) de réception et de vérification, agencés pour recevoir en provenance du module de sécurité l'identifiant physique du module de sécurité et l'aléa, et pour vérifier que l'identifiant anonyme reçu du deuxième serveur a été calculé à partir de l'identifiant physique du module de sécurité et de l'aléa, et
- des moyens de délivrance (128), agencés pour délivrer ladite commande audit équipement mobile lorsque la vérification est positive.

7. Programme d'ordinateur sur un support de données et chargeable dans la mémoire d'un premier serveur, le programme comprenant des portions de code pour l'exécution des étapes du procédé selon la revendication 1, lorsque le programme est exécuté sur ledit premier serveur.

8. Support de données dans lequel est enregistré le programme selon la revendication 7.

9. Système de fourniture d'une commande relative à un profil d'accès à un réseau, ledit système comprenant :
- au moins un premier serveur (12) selon la revendication 6,
- au moins un équipement mobile agencé pour obtenir ladite commande relative à un profil d'accès à un réseau, la commande étant destinée à être mise en oeuvre sur un module de sécurité (101) dudit équipement, ledit équipement mobile comprenant :
- des premiers moyens d'envoi (10-5), agencés pour envoyer à un troisième serveur (13) une requête d'obtention d'informations destinée à obtenir la commande, ladite requête comprenant l'identifiant anonyme du module de sécurité,
- des premiers moyens de réception (10-6), agencés pour recevoir en provenance du troisième serveur de l' adresse du premier serveur (12) associée à l'identifiant anonyme du module de sécurité,
- des deuxièmes moyens d'envoi (10-7), agencés pour envoyer au premier serveur l'identifiant physique du module de sécurité et l'aléa,
- des deuxièmes moyens de réception (10-8), agencés pour recevoir en provenance du premier serveur ladite commande lorsque la vérification par le premier serveur que l'identifiant anonyme du module de sécurité a été calculé à partir de l'identifiant physique reçu et de l'aléa est positive,
- un troisième serveur (13), comprenant :
- un premier module de réception, agencé pour recevoir du premier serveur (12) la notification destinée à indiquer que la commande a été préparée, la notification comprenant l'adresse du premier serveur et l'identifiant anonyme d'un module de sécurité,
- un deuxième module de réception, agencé pour recevoir de l'équipement mobile la requête d'obtention d'informations destinée à obtenir la commande, ladite requête comprenant l'identifiant anonyme du module de sécurité ;
- un module d'envoi, agencé pour envoyer à l'équipement mobile l'adresse du premier serveur associée à l'identifiant anonyme, l'équipement mobile pouvant retirer ladite commande auprès dudit premier serveur.

## Patentansprüche

1. Verfahren zum Bereitstellen, für ein Mobilgerät (10) durch einen ersten Server (12), eines Befehls in Bezug auf ein Profil für den Zugriff auf ein Netzwerk, wobei der Befehl dazu bestimmt ist, auf einem Sicherheitsmodul (101) des Geräts umgesetzt zu werden, wobei das Verfahren Folgendes beinhaltet:
- Empfangen (E8), durch den ersten Server von einem zweiten Server (11), einer Anforderung nach dem Befehl, der mit einer anonymen Kennung des Sicherheitsmoduls assoziiert ist, wobei die Anforderung die anonyme Kennung beinhaltet, wobei die anonyme Kennung anhand einer physischen Kennung des Sicherheitsmoduls und eines Zufallswerts berechnet wurde,
- Vorbereiten (E9), durch den ersten Server, des Befehls und Senden, an einen dritten Server (13), einer Benachrichtigung, die dazu bestimmt ist, anzuzeigen, dass der Befehl vorbereitet wurde, wobei die Benachrichtigung die Adresse des ersten Servers und die anonyme Kennung beinhaltet,
- Verbinden (E13) des Mobilgeräts mit dem ersten Server, wobei die Adresse des ersten Servers (12) dem Mobilgerät vorab durch den dritten Server (13) bereitgestellt wurde,
- Empfangen (E16), durch den ersten Server von dem Sicherheitsmodul, der physischen Kennung des Sicherheitsmoduls und des Zufallswerts und Prüfen, durch den ersten Server, dass die von dem zweiten Server empfangene anonyme Kennung anhand der physischen Kennung des Sicherheitsmoduls und des Zufallswerts berechnet wurde, und
- Übermitteln (E17), an das Mobilgerät, des Befehls durch den ersten Server, wenn die Prüfung positiv ist.

2. Bereitstellungsverfahren nach Anspruch 1, wobei das Verfahren ferner Folgendes beinhaltet:
- Senden (E11), durch das Mobilgerät an den dritten Server (13), einer Anforderung nach dem Erhalten von Informationen, die dazu bestimmt ist, den Befehl zu erhalten, wobei die Anforderung die anonyme Kennung des Sicherheitsmoduls beinhaltet.

3. Bereitstellungsverfahren nach Anspruch 2, das Folgendes beinhaltet:
- Berechnen (E5), durch das Sicherheitsmodul, der anonymen Kennung des Sicherheitsmoduls durch Anwendung einer Einwegfunktion auf die physische Kennung des Moduls und auf den Zufallswert, wobei die Einwegfunktion ferner eine Nicht-Kollisions-Eigenschaft aufweist,
- Senden (E7), durch das Mobilgerät, der anonymen Kennung an den zweiten Server (11).

4. Bereitstellungsverfahren nach einem der vorhergehenden Ansprüche, das eine gegenseitige Authentifizierung (E10) zwischen dem Sicherheitsmodul und dem dritten Server (13) beinhaltet, wobei die Authentifizierung repräsentativ für eine Zustimmung des Benutzers ist, die physische Kennung des Sicherheitsmoduls an den dritten Server (13) weiterzugeben.

5. Bereitstellungsverfahren nach einem der Ansprüche 1 bis 3, das eine anonyme Authentifizierung des Sicherheitsmoduls gegenüber dem dritten Server (13) beinhaltet, die mit Hilfe eines Gruppensignaturalgorithmus umgesetzt wird.

6. Erster Server (12), der dazu eingerichtet ist, einen Befehl in Bezug auf ein Profil für den Zugriff auf ein Netzwerk, der von einem Mobilgerät angefordert wird, vorzubereiten und bereitzustellen, wobei der Befehl dazu bestimmt ist, auf einem Sicherheitsmodul (101) des Geräts umgesetzt zu werden, wobei der Server Folgendes beinhaltet:
- Empfangsmittel (124), die dazu eingerichtet sind, von einem zweiten Server (11) eine Anforderung nach dem Befehl, der mit einer anonymen Kennung des Sicherheitsmoduls assoziiert ist, zu empfangen, wobei die Anforderung die anonyme Kennung beinhaltet, wobei die anonyme Kennung anhand einer physischen Kennung des Sicherheitsmoduls und eines Zufallswerts berechnet wurde,
- Vorbereitungsmittel (125), die dazu eingerichtet sind, den Befehl vorzubereiten und eine Benachrichtigung, die dazu bestimmt ist, anzuzeigen, dass der Befehl vorbereitet wurde, an einen dritten Server (13) zu senden, wobei die Benachrichtigung die Adresse des ersten Servers und die anonyme Kennung beinhaltet,
- Verbindungsmittel (126), die dazu eingerichtet sind, eine Verbindung des Mobilgeräts zu akzeptieren, wobei die Adresse des ersten Servers (12) dem Mobilgerät vorab durch den dritten Server (13) bereitgestellt wurde,
- Empfangs- und Prüfmittel (127), die dazu eingerichtet sind, die physische Kennung des Sicherheitsmoduls und den Zufallswert von dem Sicherheitsmodul zu empfangen und zu prüfen, dass die von dem zweiten Server empfangene anonyme Kennung anhand der physischen Kennung des Sicherheitsmoduls und des Zufallswerts berechnet wurde, und
- Übermittlungsmittel (128), die dazu eingerichtet sind, den Befehl an das Mobilgerät zu übermitteln, wenn die Prüfung positiv ist.

7. Computerprogramm auf einem Datenträger, das in den Speicher eines ersten Servers geladen werden kann, wobei das Programm Codeabschnitte zur Ausführung der Schritte des Verfahrens nach Anspruch 1 beinhaltet, wenn das Programm auf dem ersten Server ausgeführt wird.

8. Datenträger, auf dem das Programm nach Anspruch 7 aufgezeichnet ist.

9. System zum Bereitstellen eines Befehls in Bezug auf ein Profil für den Zugriff auf ein Netzwerk, wobei das System Folgendes beinhaltet:
- mindestens einen ersten Server (12) nach Anspruch 6,
- mindestens ein Mobilgerät, das dazu eingerichtet ist, den Befehl in Bezug auf ein Profil für den Zugriff auf ein Netzwerk zu erhalten, wobei der Befehl dazu bestimmt ist, auf einem Sicherheitsmodul (101) des Geräts umgesetzt zu werden, wobei das Mobilgerät Folgendes beinhaltet:
- erste Sendemittel (10-5), die dazu eingerichtet sind, eine Anforderung nach dem Erhalten von Informationen, die dazu bestimmt ist, den Befehl zu erhalten, an einen dritten Server (13) zu senden, wobei die Anforderung die anonyme Kennung des Sicherheitsmoduls beinhaltet,
- erste Empfangsmittel (10-6), die dazu eingerichtet sind, die Adresse des ersten Servers (12), die mit der anonymen Kennung des Sicherheitsmoduls assoziiert ist, von dem dritten Server zu empfangen,
- zweite Sendemittel (10-7), die dazu eingerichtet sind, die physische Kennung des Sicherheitsmoduls und den Zufallswert an den ersten Server zu senden,
- zweite Empfangsmittel (10-8), die dazu eingerichtet sind, den Befehl von dem ersten Server zu empfangen, wenn die Prüfung, durch den ersten Server, dass die anonyme Kennung des Sicherheitsmoduls anhand der empfangenen physischen Kennung und des Zufallswerts berechnet wurde, positiv ist,
- einen dritten Server (13), der Folgendes beinhaltet:
- ein erstes Empfangsmodul, das dazu eingerichtet ist, die Benachrichtigung, die dazu bestimmt ist, anzuzeigen, dass der Befehl vorbereitet wurde, von dem ersten Server (12) zu empfangen, wobei die Benachrichtigung die Adresse des ersten Servers und die anonyme Kennung eines Sicherheitsmoduls beinhaltet,
- ein zweites Empfangsmodul, das dazu eingerichtet ist, die Anforderung nach dem Erhalten von Informationen, die dazu bestimmt ist, den Befehl zu erhalten, von dem Mobilgerät zu empfangen, wobei die Anforderung die anonyme Kennung des Sicherheitsmoduls beinhaltet;
- ein Sendemodul, das dazu eingerichtet ist, die Adresse des ersten Servers, die mit der anonymen Kennung assoziiert ist, an das Mobilgerät zu senden, wobei das Mobilgerät den Befehl von dem ersten Server abrufen kann.

## Claims

1. Method for providing, to a mobile equipment (10), by way of a first server (12), a command relating to a profile for accessing a network, the command being intended to be implemented on a security module (101) of said equipment, said method comprising:
- the first server receiving (E8), from a second server (11), a request for said command associated with an anonymous identifier of the security module, said request comprising said anonymous identifier, said anonymous identifier having been calculated from a physical identifier of the security module and from a random,
- the first server preparing (E9) said command and sending, to a third server (13), a notification intended to indicate that the command has been prepared, the notification comprising the address of the first server and the anonymous identifier,
- connecting (E13) the mobile equipment to the first server, the address of the first server (12) having been provided beforehand to the mobile equipment by the third server (13),
- the first server receiving (E16), from the security module, the physical identifier of the security module and the random, and the first server checking that the anonymous identifier received from the second server has been calculated from the physical identifier of the security module and from the random, and
- the first server delivering (E17) said command to said mobile equipment when the check is positive.

2. Provision method according to Claim 1, said method furthermore comprising:
- the mobile equipment sending (E11), to the third server (13), an information obtainment request intended to obtain the command, said request comprising the anonymous identifier of the security module.

3. Provision method according to Claim 2, comprising:
- the security module calculating (E5) the anonymous identifier of the security module by applying a one-way function to the physical identifier of the module and to the random, said one-way function also having a non-collision property,
- the mobile equipment sending (E7) said anonymous identifier to the second server (11).

4. Provision method according to one of the preceding claims, comprising mutual authentication (E10) between the security module and the third server (13), said authentication being representative of an agreement of the user to disclose the physical identifier of the security module to the third server (13).

5. Provision method according to one of Claims 1 to 3, comprising anonymous authentication of the security module to the third server (13), implemented by way of a group signature algorithm.

6. First server (12) designed to prepare and provide a command relating to a profile for accessing the network requested from a mobile equipment, the command being intended to be implemented on a security module (101) of said equipment, said server comprising:
- reception means (124), designed to receive, from a second server (11), a request for said command associated with an anonymous identifier of the security module, said request comprising said anonymous identifier, said anonymous identifier having been calculated from a physical identifier of the security module and from a random,
- preparation means (125), designed to prepare said command and to send, to a third server (13), a notification intended to indicate that the command has been prepared, the notification comprising the address of the first server and the anonymous identifier,
- connection means (126), designed to accept a connection of the mobile equipment, the address of the first server (12) having been provided beforehand to the mobile equipment by the third server (13),
- reception and checking means (127), designed to receive, from the security module, the physical identifier of the security module and the random, and to check that the anonymous identifier received from the second server has been calculated from the physical identifier of the security module and from the random, and
- delivery means (128), designed to deliver said command to said mobile equipment when the check is positive.

7. Computer program on a data medium and able to be loaded into the memory of a first server, the program comprising code portions for executing the steps of the method according to Claim 1 when the program is executed on said first server.

8. Data medium on which the program according to Claim 7 is recorded.

9. System for providing a command relating to a profile for accessing a network, said system comprising:
- at least one first server (12) according to Claim 6,
- at least one mobile equipment designed to obtain said command relating to a profile for accessing a network, the command being intended to be implemented on a security module (101) of said equipment, said mobile equipment comprising:
- first sending means (10-5), designed to send, to a third server (13), an information obtainment request intended to obtain the command, said request comprising the anonymous identifier of the security module,
- first reception means (10-6), designed to receive, from the third server, the address of the first server (12) associated with the anonymous identifier of the security module,
- second sending means (10-7), designed to send, to the first server, the physical identifier of the security module and the random,
- second reception means (10-8), designed to receive, from the first server, said command when the check, by the first server, that the anonymous identifier of the security module has been calculated from the received physical identifier and from the random is positive,
- a third server (13), comprising:
- a first reception module, designed to receive, from the first server (12), the notification intended to indicate that the command has been prepared, the notification comprising the address of the first server and the anonymous identifier of a security module,
- a second reception module, designed to receive, from the mobile equipment, the information obtainment request intended to obtain the command, said request comprising the anonymous identifier of the security module,
- a sending module, designed to send, to the mobile equipment, the address of the first server associated with the anonymous identifier, the mobile equipment being able to retrieve said command from said first server.
